Europäisches Patentamt

European Patent Office

Office européen des brevets

(19)

(11) Publication number: **0 267 660 B1**

# EUROPEAN PATENT SPECIFICATION

(45) Date of publication of patent specification: **20.03.91**

(51) Int. Cl.⁵: **A23F 3/18, A23F 3/22**

(21) Application number: **87202201.7**

(22) Date of filing: **12.11.87**

(54) Concentrated tea extract.

(30) Priority: **14.11.86 GB 8627290**

(43) Date of publication of application:
**18.05.88 Bulletin 88/20**

(45) Publication of the grant of the patent:
**20.03.91 Bulletin 91/12**

(84) Designated Contracting States:
**AT BE CH DE ES FR GB GR IT LI NL SE**

(56) References cited:
**EP-A- 0 133 772**
**GB-A- 559 758**
**GB-A- 1 284 721**

**INTERNATIONAL JOURNAL OF FOOD RE-
SEARCH AND TECHNOLOGY, vol. 179, no. 2,
August 1984, pages 112-118, Springer-
Verlag, Berlin, DE; P. SCHREIER et al.: "Über
das Aroma von schwarzem Tee: Herstellung
eines Teekonzentrates mittels Umkehros-
mose und dessen analytische Charak-
terisierung"**

**FOOD TECHNOLOGY, vol. 38, no. 12, Decem-
ber 1984, pages 77-87, Chicago, Illinois, US;
D.J. PAULSON et al.: "Crossflow membrane
technology and its applications"**

(73) Proprietor: **UNILEVER NV
Burgemeester s'Jacobplein 1 P.O. Box 760
NL-3000 DK Rotterdam(NL)BE CH DE ES FR
GR IT LI NL SE AT**

Proprietor: **UNILEVER PLC
Unilever House Blackfriars P.O. Box 68
London EC4P 4BQ(GB)GB**

(72) Inventor: **Hoogstad, Bruin
34 Newstead Way
Bedford MK41 8RH(GB)**

(74) Representative: **Hartong, Richard Leroy et al
Unilever N.V. Patent Division P.O. Box 137
NL-3130 AC Vlaardingen(NL)**

## Description

The present invention relates to a process for the preparation of a concentrated tea extract.

Concentrated tea extracts are commonly used as a base for the preparation of instant tea. A well-known method to prepare instant tea involves the freeze-drying of a frozen concentrated tea extract as described in EP 133 772.

The preparation of a concentrated tea extract usually involves an extraction step, wherein tea-leaves are extracted with water, followed by a concentration step wherein the solids content of the extract is increased.

Several attempts have previously been made to improve the quality of concentrated tea extracts by selecting the conditions for extraction and/or concentration.

GB 559 758 describes a two-stage extraction process wherein the tea is first extracted at ambient temperature, whereafter the first extract is separated from the tea-leaves and the extracted leaves are then extracted with hot water, whereafter both extracts are separately concentrated under vacuum and subsequently combined.

This method has the disadvantage that the quality of the two extracts is negatively affected during concentration. This quality deterioration can partly be explained by the fact that many volatile components are evaporated during concentration under vacuum conditions. Other reasons for quality loss can be the occurrence of chemical reactions and cream segregation.

A method for minimizing the quality loss of a tea extract during concentration is proposed in EP 133 772.

This method involves the subjection of a tea extract, obtained after extracting tea at an elevated temperature, to reverse osmosis at a lower temperature. However, this method has the disadvantage that it requires the addition of a stabilizer prior to concentration in order to prevent so-called cream formation.

"Finally a process for the preparation of a cold water-soluble powdered tea extract has been described in GB-A-1,284,721. In this process tea leaves are first extracted with cold water having a temperature below 35°C (usually between 0°C and 30°C) and the extract obtained is concentrated, e.g. by reverse osmosis. The spent tea leaves from this first extraction are subsequently at least once extracted with hot water, having a temperature above 35°C, and usually in the range 60°C to 100°C. The hot water extract obtained is then subjected to an oxidative solubilising process and after the oxidation reaction has been effected, the treated extract is also concentrated, using reverse osmosis or freeze concentration.

Finally the two concentrated extracts obtained are combined and dried to provide a powdered tea extract. The oxidative solubilising process not only impairs the flavour and aroma constituents, but also requires an adjustment and readjustment of the pH value necessitating the addition of alkali and acid to the tea, which also has a negative influence on the quality of the final tea product. With regard to the concentration step used in this prior art process, no indication has been given of its conditions (temperature and pressure). Any suitable concentration method, for example reverse osmosis or freeze concentration may be used, clearly indicating that the concentration step is not critical.

Contrary to this, applicants have found that the conditions under which the two extracts are concentrated are critical, if no chemical treatments or additives are used during the processing of the tea leaf to the final tea product."

The object of the present invention is to provide a process for the preparation of a concentrated tea extract of high quality, which does not require the use of chemical additives.

It was found that a concentrated tea extract can be obtained by a two-stage extraction step followed by a two-stage concentration step, wherein the concentration steps are carried out under special conditions.

Therefore, the present invention relates to a process for the preparation of a concentrated tea extract comprising the steps of:

(a) extracting tea-leaves with water having a temperature between 15 and 50°C and separating the first extract from the tea-leaves;

(b) extracting tea-leaves which have previously been extracted with water between 15 and 50°C for a second time, with water having a temperature of more than 50°C and separating the second extract from the tea-leaves;

(c) concentrating said first extract to obtain a first concentrate;

(d) concentrating said second extract to obtain a second concentrate; and

(e) combining said first and second concentrate, wherein said first extract is concentrated by subjecting it to reverse osmosis at a temperature between 20 and 50°C and said second extract is concentrated between 50 and 100°C.

The second extract is obtained by extracting with water having a temperature above 50°C, preferably above 60°C.

The treatment of the first extract by reverse osmosis at lower temperatures has the advantage that the loss of volatile components, aromates etc. can mainly be avoided and the occurrence of chemically destructive reactions can be minimized.

The concentration of the second extract can be carried out in any conventional manner, such as thermal concentration, etc., as long as the temperature is kept above 50°C, preferably between 50 and 100°C.

It was found, however, that the quality of the concentrated tea extract is optimal when the second extract is concentrated by subjecting it to reverse osmosis at a temperature between 50 and 100°C, preferably between 55 and 70°C.

Although the other conditions for reverse osmosis can vary within a broad range, best results are obtained when membranes which stop 99% NaCl are used. A suitable membrane is for instance PCI ZF 99. The pressure applied during reverse osmosis is preferably 30 to 60 bar.

The solids content of the first extract prior to concentration is preferably 1-6%, the solids content of the second extract 1-6%.

The concentration of the first extract is preferably carried out until the solids content is increased to 15-25%; the solids content of the second extract after concentration is also preferred to be from 15 to 25%.

The extraction times and the ratio of tea to water during extraction can be varied according to the solids content of the extract which is wanted. Usual extraction times are 5 to 100 minutes; the weight ratio of tea to water usually lies between 1:5 and 1:30.

After concentration, the two concentrated fractions are combined. If desired, it is possible that the ratio of the two extracts in the final product is different from the original ratio in which the two extracts were obtained. It is also possible to combine two concentrated fractions which are each obtained from a different batch of tea-leaves which need not necessarily be of the same type.

The invention will be further illustrated by means of the following example.

Example

12 kg of a standard black leaf tea are extracted with 150 litres of water in a recirculation column for 60 minutes at a temperature of 25°C. The extract is separated from the tea-leaves and has a solids content of 2 wt.%. The extracted tea-leaves are then further extracted with 120 litres of water at 70°C for 30 minutes. The second extract is separated from the tea-leaves and has a solids content of 2 wt.%. The first extract is concentrated by subjecting it to reverse osmosis at a temperature of 35°C and a pressure of 40 bar and by using a PCI ZF 99 membrane. The solids content of the concentrated extract is 20 wt.%. The second extract is concentrated by subjecting it to reverse osmosis at a temperature of 60°C and a pressure of 40 bar and by using a PCI ZF 99 membrane. The solids content of the second concentrated extract is 20 wt.%.

The two concentrated extracts are mixed and subsequently frozen and freeze-dried. One spoonful of the freeze-dried product is mixed with 200 ml hot water to give a tasty cup of tea of high quality.

## Claims

1. A process for the preparation of a concentrated tea extract comprising the steps of:

    (a) extracting tea-leaves with water having a temperature between 15 and 50°C and separating the first extract from the tea-leaves;

    (b) extracting tea-leaves which have previously been extracted with water between 15 and 50°C for a second time, with water having a temperature of more than 50°C and separating the second extract from the tea-leaves;

    (c) concentrating said first extract to obtain a first concentrate;

    (d) concentrating said second extract to obtain a second concentrate; and

    (e) combining said first and second concentrate, characterised in that said first extract is concentrated by subjecting it to reverse osmosis at a temperature between 20 and 50°C and said second extract is concentrated between 50 and 100°C.

2. A process according to claim 1, characterized in that the second extract is concentrated by subjecting it to reverse osmosis at a temperature between 50 and 100°C.

3. A process according to claim 2, characterized in that the second extract is concentrated at a temperature between 55 and 70°C.

4. A process according to claim 1, 2 or 3, characterized in that the reverse osmosis is carried out at a pressure of 30 to 60 bar.

5. A concentrated tea extract whenever prepared by the processes as claimed in any of claims 1 to 4.

## Revendications

1. Un procédé pour la préparation d'un extrait de thé concentré comprenant les étapes consistant à:

    (a) extraire les feuilles de thé avec de l'eau ayant une température comprise entre 15°C et 50°C, puis à séparer le premier extrait des feuilles de thé ;

(b) extraire une seconde fois les feuilles de thé l'ayant été une première fois avec de l'eau ayant une température comprise entre 15°C et 50°C, mais cette fois-ci avec de l'eau ayant une température supérieure à 50°C puis à séparer le second extrait des feuilles de thé ;

(c) concentrer ledit premier extrait afin d'obtenir un premier concentrat ; et

(d) concentrer ledit second extrait afin d'obtenir un second concentrat ; et

(e) combiner ledit premier et ledit second concentrat, caractérisé en ce qu'on concentre ledit premier extrait en le soumettant à une osmose inverse à une température comprise entre 20°C et 50°C et en concentrant ledit second extrait à une température comprise entre 50°C et 100°C.

2.  Un procédé selon la revendication 1, caractérisé en ce qu'on concentre le second extrait en le soumettant à une osmose inverse à une température comprise entre 50°C et 100°C.

3.  Un procédé selon la revendication 2, caractérisé en ce que le second extrait est concentré à une température comprise entre 55°C et 70°C.

4.  Un procédé selon la revendication 1, 2 ou 3, caractérisé en ce que l'osmose inverse est effectuée sous une pression de 30 à 60 bars.

5.  Un extrait de thé concentré lorsqu'il est préparé selon les procédés tels que revendiqués dans l'une des revendications 1 à 4.


Ansprüche

1.  Verfahren zur Herstellung eines konzentrierten Tee-Extrakts, umfassend die Stufen:

(a) Extrahieren von Teeblättern mit Wasser von einer Temperatur zwischen 15 und 50°C und Abtrennen des ersten Extrakts von den Teeblättern;

(b) Extrahieren der Teeblätter, die vorher mit Wasser zwischen 15 und 50°C extrahiert wurden, ein zweites Mal mit Wasser von einer Temperatur von mehr als 50°C und Abtrennen des zweiten Extrakts von den Teeblättern;

(c) Konzentrieren des genannten ersten Extrakts zur Bildung eines ersten Konzentrates;

(d) Konzentrieren des genannten zweiten Extrakts zur Bildung eines zweiten Konzentrates; und

(e) Vereinigen der genannten ersten und zweiten Konzentrate, dadurch gekennzeichnet, daß der genannte erste Extrakt konzentriert wird, indem man ihn bei einer Temperatur zwischen 20 und 50°C einer umgekehrten Osmose unterwirft, und der genannte zweite Extrakt zwischen 50 und 100°C konzentriert wird.

2.  Verfahren nach Anspruch 1, dadurch gekennzeichnet, daß der zweite Extrakt konzentriert wird, indem er zwischen einer Temperatur von 50 bis 100°C einer umgekehrten Osmose unterworfen wird.

3.  Verfahren nach Anspruch 2, dadurch gekennzeichnet, daß der zweite Extrakt bei einer Temperatur zwischen 55 und 70°C konzentriert wird.

4.  Verfahren nach Anspruch 1, 2 oder 3, dadurch gekennzeichnet, daß die umgekehrte Osmose bei einem Druck von 30 bis 60 bar durchgeführt wird.

5.  Konzentrierter Tee-Extrakt hergestellt durch Verfahren, wie sie in einem der Ansprüche 1 bis 4 beansprucht werden.